# EUROPEAN PATENT APPLICATION

(11) **EP 2 885 973 A1**
(43) Date of publication of application: **24.06.2015**
(21) Application number: 13197811.6
(22) Date of filing: 17.12.2013
(51) Int. Cl.: A01N 63/04, A01P 21/00

(54) **Use of Colletotrichum tofieldiae for promoting plant growth**

(71) Applicant: Max-Planck-Gesellschaft zur Förderung der Wissenschaften e.V., 80539 München (DE); Universidad Politécnica De Madrid, 28040 Madrid (ES)
(72) Inventor: Sacristán, Soledad, 40422 Otero de Herreros ( Segovia ) (ES); Schulze-Lefert, Paul, 50829 Köln (DE); O'Connell, Richard, 78121 Crespières (FR); Hiruma, Kei, 50823 Köln (DE)
(74) Representative: Vossius & Partner Patentanwälte Rechtsanwälte mbB

(57) **Abstract**

Described are the use of the microorganism *Colletotrichum tofieldiae* for promoting plant vegetative growth, methods for promoting plant vegetative growth by making use of *Colletotrichum tofieldiae* and compositions for promoting plant vegetative growth containing *Colletotrichum tofieldiae.*

## Description

The present invention relates to the use of the microorganism *Colletotrichum tofieldiae* for promoting vegetative plant growth, to methods for promoting vegetative plant growth by making use of *Colletotrichum tofieldiae* and to compositions containing *Colletotrichum tofieldiae* for promoting vegetative plant growth.

Symbiosis is a widespread phenomenon in biological systems. In its broadest sense it is defined as a close and often long-term interaction between two or more different biological species. Mutualism is a form of symbiosis in which all partners of a symbiosis profit from the interaction. Most plant organisms have symbiotic relationships with one or more fungi (Petrini; Taxonomy of endophytic fungi of aerial plant tissues, in: N.J. Fokkema & J. van den Heuvel (Ed.), Microbiology of the Phyllosphere, Cambridge (1986), Cambridge University Press, 175-187). These fungi may play important roles in the structure, function and health of the plants and the plant communities (Bacon and Hill; Symptomless grass endophytes: products of coevolutionary symbioses and their role in the ecological adaptations of grasses, in: S.C. Redkin & L.M. Carries (Ed.), Endophytic fungi in Grasses and Woody Plants, St. Paul (1996), APS Press, 155-178; Clay and Holah, Science 285 (1999), 1742-1744; Petrini, loc. cit.; Read, Mycorrhiza - the state of the art, in: A. Varma & B. Hock (Ed.), Mycorhiza, Berlin (1999), Springer Verlag, 3-34; Rodriguez and Redman, Advances in Botanical Research 24 (1997), 169-193). Symbiotic relationships between plants and fungi can confer enhanced growth to host plants and it has, e.g., been shown that endophytic fungi may confer to their host plants tolerance to extreme environmental conditions such as high temperature, drought or high salt content of the soil (Redman et al., Science 298 (2002), 1581; Rodriguez et al., Mitigation and adaptation strategies for global change 9 (2004), 261-272; Rodriguez and Redman, J. Exp. Botany 59 (2008), 1109-1114; Rodriguez et al., Communicative & Integrative Biology 2 (2009), 1-3). Moreover, the symbiosis with fungi may also lead in the host cells to an increase in nutrient acquisition and growth rates.

Identifying fungi which, due to symbiosis and in particular due to a mutualistic symbiosis, are capable of increasing plant growth are of high interest because of the ever increasing world population and corresponding need in providing nutrients in the form of either feed for animals or food for humans.

The present inventors have found that the fungus *Colletotrichum tofieldiae* can promote vegetative plant growth in a variety of plants. Even more interestingly, it could be shown that this vegetative growth promoting effect is observed under phosphate-limiting conditions and under nitrogen-limiting conditions.

Thus, the present invention relates to the use of the microorganism *Colletotrichum tofieldiae* for promoting vegetative plant growth.

Moreover, the present invention relates to a method for promoting vegetative plant growth comprising the step of contacting the roots of a plant or the seeds of a plant with the microorganism *Colletotrichum tofieldiae.*

The term "microorganism *Colletotrichum tofieldiae"* relates to the microorganism *Colletotrichum tofieldiae* in any of its states as they occur during the life cycle of the fungus, i.e. any vegetative or propagative form of the fungus, such as e.g. hyphae or spores, in particular conidia, chlamydospores or chlamydoconida, or sclerotia.

The term "hyphae" as used herein refers to that part of the fungus which builds the mycelium and which provides for the vegetative growth of the fungus. The term "spore" as user herein refers to all possible types of spores produced by *Colletotrichum tofieldiae,* such as conidia, chlamydospores or chlamydoconida. The term "conidia" as used herein refers to asexual non-motile reproductive cells which are generally thin-walled propagules produced from the tips of specialized cells called conidiophores. Conidia do not typically survive very long under natural conditions. The terms" "chlamydospore" and "chlamydoconida" are synonyms and are spores which are derived from a hyphal cell and are generally thick-walled structures that can survive for long periods and can therefore function as resting structures.

The term "sclerotia" (singular "sclerotium") as used herein refers to compact mass of hardened mycelium, which is most often darkly pigmented, and which can survive environmental extremes and remain dormant for extended periods.

*Colletotrichum tofieldiae* is a fungus belonging to the genus *Colletotrichum* (Glomerellaceae, Sordariomycetidae, Sordariomycetes, Ascomycota) and is described in detail in Damm et al. (Fungal Diversity 39 (2009), 45-87). In the context of the present invention, any isolate or strain of *Colletotrichum tofieldiae* can be used. The invention is illustrated by the use of two isolates (referred to as isolates 0861 and 0866) which have been deposited by Universidad Politécnica de Madrid under the Budapest Treaty on May 30, 2013 at the COLECCIÓN ESPAÑOLA DE CULTIVOS TIPO (CECT), University of Valencia, Parc Cientific Universitat de València, Catedrático Agustín Escardino, 9, 46980 Paterna (Valencia) SPAIN, under the deposit numbers CECT 20833 and CECT 20834, respectively. In one preferred embodiment, the term "microorganism *Colletotrichum tofieldiae*" refers to any of these deposited strains.

The term "promoting vegetative plant growth" as used in the context of the present invention means that a plant which has been treated by contacting its roots or seeds with the microorganism has an increased size and/or an increased mass of the vegetative parts (roots, leaves, shoots or stems) in comparison to a corresponding untreated plant.

The term "increased size" or "increased mass" preferably means an increase in size or mass of at least 5%, more preferably of at least 10%, even more preferably of at least 15%.

In one preferred embodiment the term "promoting vegetative plant growth" means an increase in root growth. More preferably, the root growth of a plant treated with the microorganism *Colletotrichum tofieldiae* is increased by at least 5%, more preferably by at least 10%, even more preferably by at least 15% when compared to a corresponding untreated plant.

In another preferred embodiment the term "promoting vegetative plant growth" means an increase in shoot growth. More preferably, the shoot growth of a plant treated with the microorganism *Colletotrichum tofieldiae* is increased by at least 5%, more preferably by at least 10%, even more preferably by at least 15% when compared to a corresponding untreated plant.

The use according to the invention or the method according to the invention involves that the roots of the plant or the seeds of the plant are contacted with the microorganism. The term "contacting" refers to applying the microorganism to the roots or seeds of the plant or infecting the roots or seeds of the plant with the microorganism. Again, the term "microorganism" refers to any of the states of the microorganism as they occur during the life cycle of the fungus, e.g. hyphae or spores, in particular conidia, chlamydospores or chlamydoconida, or sclerotia.

Said bringing into contact with the roots or seeds of the plant can be achieved by any possible means known to the person skilled in the art. For the contacting with the roots or seeds of the plant, the microorganism can be used in isolated form or as part of a composition in which it is present together with a suitable carrier. Applying the microorganism to the roots of the plants, can e.g. be achieved by watering the plants with a composition in fluid form containing the microorganism or by adding the microorganism in isolated form or as part of a composition to the growth substrate, such as soil, in which the plant is grown.

In one preferred embodiment, the microorganism is applied to seeds (germinated or ungerminated, preferably ungerminated).

Depending on the mode of application the microorganism may be used as part of a composition which is in a form suitable for said mode of application. For example, the composition containing the microorganism may be in fluid form. Such fluid form allows for application to the roots or to the seeds by dipping or watering. The composition may also be in a form which allows for coating, in paste form or in substantially dry and powdered form for dusting or for mixing with soil or another growth substrate used for growing plants. Possible formulations for administration of fungal compositions are given in Burges, HD (Ed.; Formulation of Microbial Biopesticides (1998), Kluwer, Dordrecht).

In one preferred embodiment the microorganism is contained in a composition in fluid form which is suitable for application to the root or to the seeds of a plant by dipping or watering. Such a composition is preferably in the form of an emulsion, preferably an emulsion which can be used for contacting the seeds with the microorganism by spraying with the emulsion. Other *Colletotrichum* species have been described as being useful as mycoherbicides, e.g. as an agent to control *Poa annua* (see, e.g., EP 653 162) and in this context suitable formulations for applying the microorganism to plants have been described. EP 653 162 describes, e.g., aqueous formulations containing spores. The concentration of spores can, e.g., be in the range of 1x10⁴ to 1x10⁹ spores/ml, preferably in the range of 1x10⁵ to 1x10⁸, even more preferably in the range of 1x10⁶ to 1x10⁸, in particular around 1x10⁷. Egly and Boyette (Weed Science 43 (1995), 312-317) describe water-corn oil emulsions in connection with the use of C. *truncatum* as a mycoherbicide. Boyette et al. (Weed Biology and Management 7 (2007), 70-76) also describe the preparation of oil-in-water emulsions in connection with the use of C. *truncatum* as a biological weed control. C. *tofieldiae* can be prepared in an analogous manner as an emulsion for the application to plant roots or plant seeds as a plant growth promoter.

In another preferred embodiment the microorganism is contained in a composition in dry and powdered form which can be used for dusting of the seeds of the plant or for mixing with soil or another growth substrate for plants. The growth substrate for plants may be any substrate commonly used in this technical field and includes, e.g., peat or mixtures containing peat, compost or an inert material.

In a further preferred embodiment the microorganism is applied to the roots of the plants. This can e.g. be achieved by watering the plants with a composition in fluid form which contains the microorganism or by adding to the soil the microorganism or a composition in solid form, such as a powder or grain, which contains the microorganism.

In a particularly preferred embodiment the microorganism is applied to seed, preferably dried seed. Even more preferably the microorganism is applied to seed as a seed coating. For this purpose the microorganisms may be contained in a composition which is in liquid form for dipping, in paste form or in substantially dry and powdered form for dusting.

In principle any form of seed coating can be used and appropriate methods and coating compositions are available to the skilled person (see e.g. WO2012118795, WO2012063970, WO2010107312, EP2229808).

The use and method described herein can be applied to any plant. The present inventors have demonstrated that *Colletotrichum tofieldiae* can infect the roots of and can increase the vegetative growth of various plant species such as *Arabidopsis thaliana, Cardemine hisuta, Arabis alpine* and *Brassica napus.* It is therefore expected that the same effect of an increase of vegetative growth can also be observed with other plants. Preferably, the plant is an agricultural plant. Examples are vegetables such as tomato, cucumber, eggplant, zucchini, squash, melons, beans, peas etc., cereals such as rice, wheat, barley, rye, maize, soy bean, alfalfa and other agricultural plants such as rapeseed, sugar beet, sugar cane, peanut, cotton, turf, fruit trees such as apple, pear, plum, cherry etc.

In one preferred embodiment the plant is a plant belonging to the family of Brassicaceae, even more preferably a plant belonging to the genus *Brassica* or *Raphanus,* more preferably a plant of the species *Brassica napus* or *Raphanus sativus.* Other preferred *Brassica* species are species which are generally regarded as agriculturally interesting plants, e.g. as crops or ornamental plants. Examples are *B. carinata* (Abyssinian mustard or Abyssinian cabbage, used to produce biodiesel), *B. elongata* (elongated mustard), *B. fruticulosa* (Mediterranean cabbage), *B. juncea* (Indian mustard, brown and leaf mustards, Sarepta mustard), B. *narinosa* (broadbeaked mustard), *B. nigra* (black mustard), B. *oleracea* (kale, cabbage, broccoli, cauliflower, Kai-lan, Brussel sprout, kohlrabi), *B. perviridis* (tender green, mustard spinach), *B. rapa* (syn. *B. campestris*; Chinese cabbage, turnip, rapini, komatsuna), *B. rupestris* (brown mustard), *B. septiceps* (seventop turnip) and *B. tournefortii* (Asian mustard).

The use or the method according to the present invention may also comprise the growing of the plants to which the microorganism is applied. The growth can occur in any suitable medium for the respective plant. Thus, the use or method may also include the step of growing the plant, preferably in soil or water. The growing of the plant in water is also referred to as growth under hydroponic conditions.

As mentioned above, the present inventors have found that surprisingly the vegetative growth promoting effect of *Colletotrichum tofieldiae* on plants is observed under phosphate-limiting conditions and under nitrogen-limiting conditions.

Therefore, in one embodiment of the use or the method according to the invention the plants are grown under phosphate-limiting conditions and/or under nitrogen-limiting conditions.

The term "phosphate-limiting conditions" preferably refers to conditions in which phosphate is a growth-limiting factor for the plants. This may be the case under nutrient conditions in which the concentration of phosphate in soil is at least 10% lower than normal fertilized agricultural conditions. In one preferred embodiment the term "phosphate-limiting conditions" refers to conditions in which the concentration of phosphate in the soil is less than 100 mg/kg soil, preferably less than 10 mg/kg soil, even more preferably less than 1, 0.1 or 0.01 mg/kg soil.

The term "nitrogen-limiting conditions" preferably refers to conditions in which nitrogen is a growth-limiting factor for the plants. This may be the case under nutrient conditions in which the concentration of nitrogen in soil is at least 10% lower than normal fertilized agricultural conditions. In one preferred embodiment the term "nitrogen-limiting conditions" refers to conditions in which the concentration of nitrogen in the soil is less than 300 mg/kg soil, preferably less than 200 mg/kg soil, even more preferably less than 100, 10 or 1 mg/kg soil.

The present invention also relates to a composition containing the microorganism *Colletotrichum tofieldiae,* in particular to a composition for promoting vegetative plant growth. Such compositions have been described above in the context of the use and the method according to the present invention. A composition according to the present invention optionally also contains a carrier. The composition may in fluid form, in particular in fluid form suitable for dipping, preferably, it is in the form of an emulsion. In one embodiment the composition comprises the microorganism *Colletotrichum tofieldiae* and a surfactant. The surfactant may facilitate application of the composition to a plant surface. Preferably the surfactant is an organosilicone such as silocane, inclusive of polyether siloxanes including a polyether modified polysiloxane (e.g. a polyether modified trisiloxane). The surfactant may be used in undiluted or diluted form. The surfactant may further comprise further elements, such as UV protectants or compounds which stimulate the growth or multiplication of the microorganism.

The composition may also be in a dry form, preferably in the form of a powder. Such a powder could be used for dusting.

The composition may also be in the form of a paste.

The concentration of the microorganism in the composition may depend on the way the composition is to be applied to the plants and the form in which the microorganism is contained in the composition.

The concentration of spores can, e.g., be in the range of 1x10⁴ to 1x10⁹ spores/ml, preferably in the range of 1x10⁵ to 1x10⁸, even more preferably in the range of 1x10⁶ to 1x10⁸, in particular around 1x10⁷ if a liquid formulation is used.

In one preferred embodiment the composition contains sclerotia of *Colletotrichum tofieldiae.* In a particularly preferred embodiment such a composition is in dry form. Such a composition is, e.g., suitable for application to the soil. In such a composition the sclerotia may be present in dry form in diatomaceous earth or starch, preferably corn starch. The preparation of such compositions can be done as described in Jackson et al. (Biological control 7 (1996), 107-113) for C. *truncatum.*

The present invention also relates to a plant seed coated with the microorganism *Colletotrichum tofieldiae.* In one preferred embodiment the seed is coated with hyphae of the microorganism *Colletotrichum tofieldiae.* In another preferred embodiment the seed is coated with sclerotia of the microorganism *Colletotrichum tofieldiae.* In a further preferred embodiment the seed is coated with spores, in particular conidia, chlamydospores or chlamydoconida, of the microorganism *Colletotrichum tofieldiae.*

The amount of spores coated on the seed is well within the knowledge of the skilled person. It is, e.g., conceivable in one embodiment that the amount of spores is between 5 and 10.000 viable spores per seed, preferably 5 to 1000, more preferably 5 to 500 or 5 to 100 and most preferably 5 to 50 spores per seed.

Methods for cultivating *Colletotrichum tofieldiae* so as to produce mycelium and/or spores, in particular conidia, chlamydospores or chlamydoconida, are known to the person skilled in the art and in principle the culture can be effected without any special procedures in an analogous way to that known for other members of the genus *Colletotrichum,* such as those described, e.g., in EP 653 162 or in Jackson et al. (Weed Technology 10 (1996), 645-650).

The present invention also relates to the use for promoting vegetative plant growth of *Colletotrichum tofieldiae* strains referred to as isolates 0861 and 0866 which have been deposited by Universidad Politécnica de Madrid under the Budapest Treaty on May 30, 2013 at the COLECCIÓN ESPAÑOLA DE CULTIVOS TIPO (CECT), University of Valencia, Parc Cientific Universitat de València, Catedrático Agustín Escardino, 9, 46980 Paterna (Valencia) SPAIN, under the deposit numbers CECT 20833 and CECT 20834, respectively, as well as to mutants or derivatives thereof which have retained the ability to promote the growth of plants.

### Figure Legends:

In the Figures the abbreviations "C.t61" and "C.t66" stand for the deposited *Colletotrichum tofieldiae* isolates 0861 and 0866, respectively.

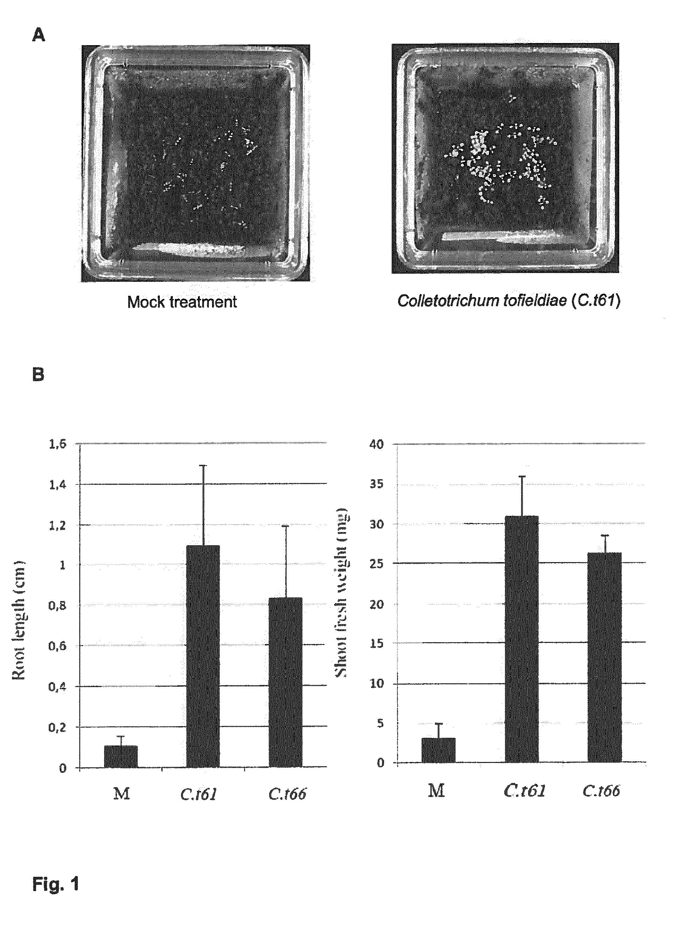

- **Figure 1**: shows that *Colletotrichum tofieldiae* rescues the plant growth defect on sterilized soil. **(A)** Co-cultivation of C. *tofieldiae* rescues growth of seedlings on autoclaved soil. **(B)** Two different strains of C. *tofieldiae* (*C.t61 and C.t66)* enhance plant growth on autoclaved soil, as measured by root length and shoot fresh weight, compared to mock treatment (M).

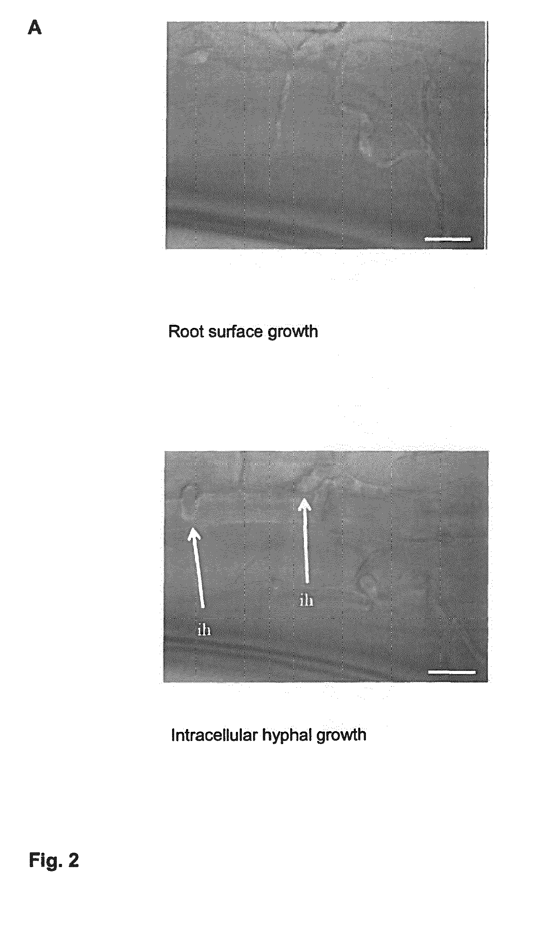

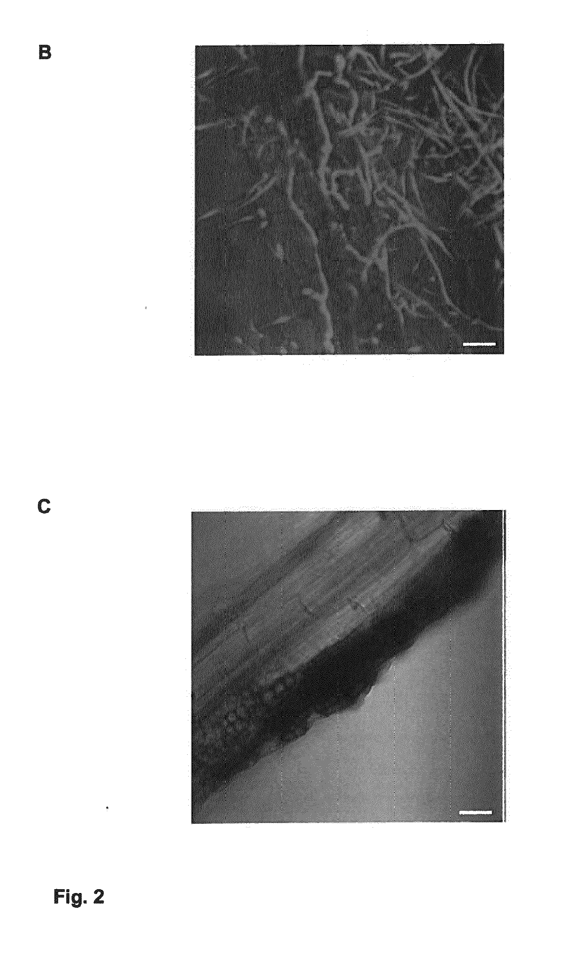

- **Figure 2**: shows that *C. tofieldiae* colonizes the root tissues of *Arabidopsis thaliana.* **(A)** Penetration of *C. tofieldiae* expressing GFP into root cortical cells at 36 hpi. ih=intracellular hypha. **(B)** Heavy colonization of C. *tofieldiae* hyphae in Arabidopsis root cells at 84 hpi. **(C)** Formation of melanized sclerotia on the root surface at 6 dpi. Bars=20µm.

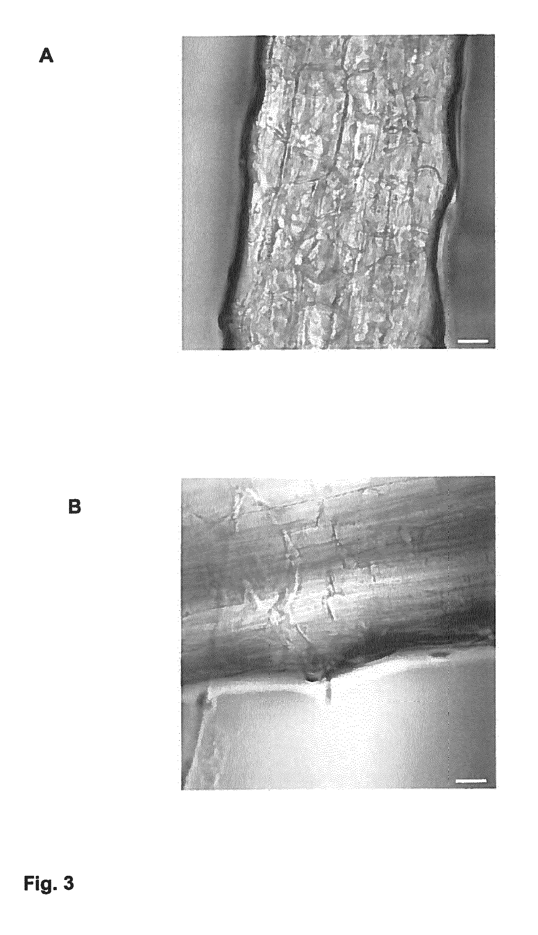

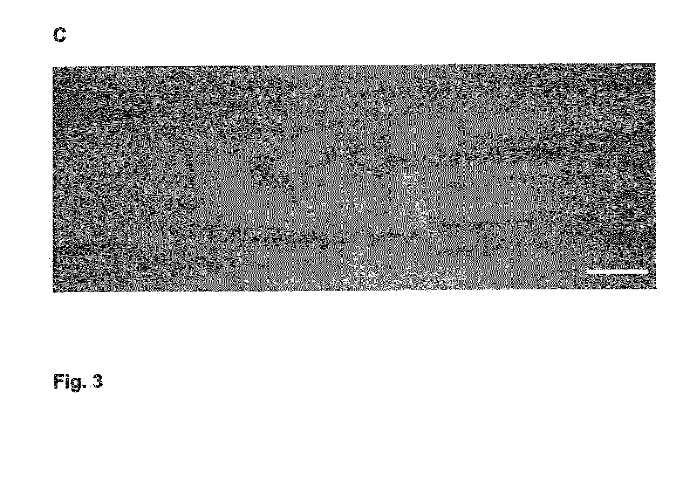

- **Figure 3**: shows that *C. tofieldiae* colonizes the root tissues of other Brassicaceae species. **(A)** Colonization of *C. tofieldiae* expressing GFP in root cells of *Arabis alpina* at 2 dpi. **(B)** Colonization of *Cadamine hirsuta* root at 2 dpi. **(C)** Colonization of *Brassica napus* root at 2 dpi. Bars= 20µm.

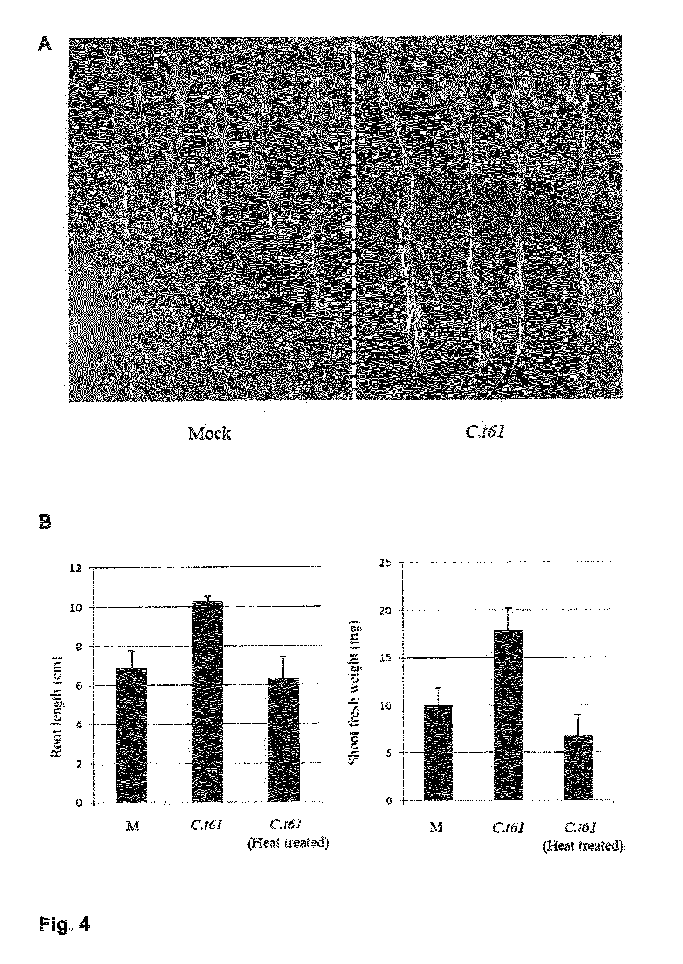

- **Figure 4**: shows the growth promotion effect of *C. tofieldiae* in phosphorus limiting nutrient conditions. **(A)** *C. tofieldiae* infection promotes larger roots and shoot in phosphorus limiting conditions. **(B)** Quantification of the growth promotion effect in phosphorus limiting conditions.

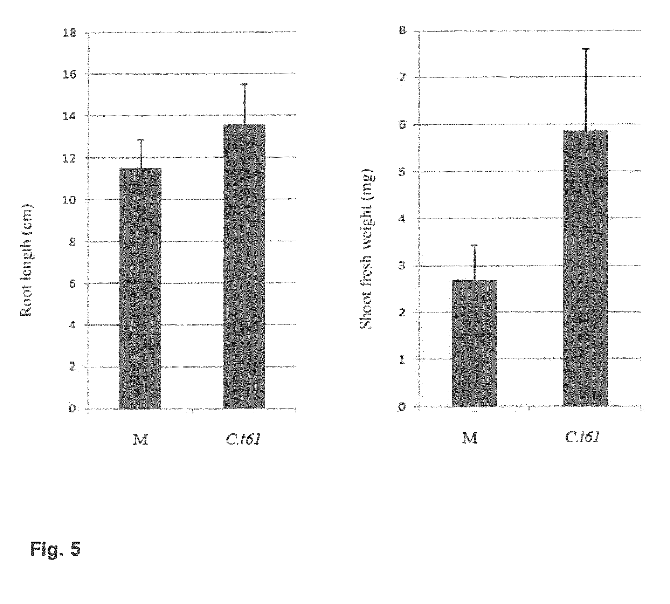

- **Figure 5**: shows the growth promotion effect of *C. tofieldiae* in nitrogen limiting nutrient conditions. Shown is the quantification of the growth promotion effect in nitrogen limiting conditions. *C. tofieldiae* significantly induces bigger shoot size in nitrogen shortage conditions.

The following non-limiting examples serve to illustrate the invention.

### Example 1: Colletotrichum tofieldiae rescues the plant growth defect on sterlized soil

Sterilized soil was prepared by autoclaving peat-based compost twice (each at 121 °C for 2 hours). Conidial suspension of C. *tofieldiae* isolate 0861 or 0866 (referred to in the Figures as "C.t61" and "C.t66") (2x10⁵ conidia per ml) were mixed with the autoclaved soil in a 1 to 5 ratio. The isolates were obtained as described in Garcia et al. (Fungal Diversity, published online: December 30, 2012; DOI 10.1007/s13225-012-0219-0). The soil was placed inside sealed plastic containers and surface-sterilized seeds of *Arabidopsis thaliana* Col-0 were sown onto the surface of the soil. The containers were incubated in a controlled environment chamber for 10 days (Fig. **1.A****),** or 18 days **(****Fig. 1.B****)** at 23°C with a 10-hour photoperiod (100 µE/m²s) and without additional water or nutrients.

### Example 2: C. tofieldiae colonizes the root tissues of Arabidopsis and of other Brassicaceae species

Transgenic cultures *C. tofieldiae* expressing cytoplasmically localized green fluorescent protein (GFP) were inoculated onto the roots of 24-day-old plants grown vertically on solid half-strength Murashige & Skoog medium (Duchefa Biocheme) contained in square Petri plates (12cm x 12cm). Inoculation was performed by placing pieces of pre-sterilized paper towel (Wepa) soaked with conidial suspension (1 x 10⁵ conidia per ml) onto the roots. After incubation overnight, the papers were removed from the roots, and the plants were further grown on the plate (23°C, 10-hour photoperiod, 100 µE/m²s) until examined using a Zeiss LSM 700 laser scanning confocal microscope, as described by Kleemann et al. (PLoS Pathogens 8, e1002643 (2012)). Generation of transgenic *C. tofieldiae* expressing GFP was conducted by *Agrobacterium tumefaciens-*mediated transformation, using procedures described by O'Connell et al. (Mol. Plant Microbe Interact. 17, 272-282 (2004)). As shown in Figures 2 and 3, C. *tofieldiae* is capapble of colonizing the roots of A. *thaliana, Arabis alpina, Cadamine hirsute* and *Brassica napus.*

### Example 3: Growth promotion effect of C. tofieldiae in phosphorus limiting nutrient conditions

The solid half-strength Murashige & Skoog medium used for providing phosphorus-limiting growth conditions contained one twentieth the concentration of KH₂PO₄ compared with phosphorus sufficient conditions (50 µM instead of 625 µM KH₂PO₄). Note that the concentration of NH₄NO₃ was ten times higher in the phosphorus-limiting medium to induce stronger plant phosphorus starvation responses. For inoculation with fungi, conidia and mycelium of C. *tofieldiae* (1 x 10⁶ conidia per ml) were mixed with the molten growth medium in a 1 to 10 ratio (after the temperature of the medium had cooled to 30°C) and the mixture was poured into square Petri plates (12cm x 12cm), 50 ml per plate. For the mock treatment, distilled water was mixed with the medium in a 1 to 10 ratio. Seedlings of *A. thaliana* Col-0 were grown aseptically for 7 days in complete Murashige & Skoog agar medium (i.e. nutrient sufficient conditions) and then transferred using sterile forceps to the phosphorus-limiting media. For each plate, 5 plants were incubated for 18 days at 21°C with a 10-hour photoperiod (80 µE/m²s) before root length and shoot fresh weight were measured. Heat-treated fungi were produced by autoclaving (121 °C for 15 min) an aliquot of the mixture of conidia and mycelium used for inoculation.

### Example 4: Growth promotion effect of C. tofieldiae in nitrogen limiting nutrient conditions

The solid half-strength Murashige & Skoog medium used for providing nitrogen-limiting conditions contained 25 µM NH₄NO₃ and 225 µM KNO₃, instead of 1000 µM NH₄NO₃ and 9400 µM KNO₃ in the sufficient conditions. All other procedures were performed as described in Example 3, above.

### Example 4: Characteristics of the Colletotrichum tofieldiae genome assembly

The genome of *C. tofieldiae* isolate 0861 was sequenced with 454 FLX+ pyrosequencing (10-fold sequence coverage) and the reads were assembled using CLC software. The results are summarized in the following Table:

**Table 1**

| **Genome features** | |
|---|---|
| Genome size | 52.6 Mbp |
| Contig number | 2,331 |
| N₅₀ contig | 98.4 kbp |
| Gene space coverage | 98.3% |

## Claims

1. Use of a microorganism of the species *Colletotrichum tofieldiae* for promoting vegetative plant growth.

2. A method for promoting vegetative plant growth comprising the step of contacting the roots of a plant or the seeds of a plant with the microorganism *Colletotrichum tofieldiae.*

3. The use of claim 1 or the method of claim 2 wherein the microorganism is in the form of spores.

4. The use of claim 1 or the method of claim 2 wherein the microorganism is in the form of hyphae or sclerotia.

5. The use of claims 1, 3 or 4 wherein the microorganism is applied to the plants by contacting plant seeds with the microorganism.

6. The use of claim 5 wherein the microorganism is contained in a composition being in fluid form, in a paste-like form or in the form of a powder.

7. The use of claims 1, 3 or 4 wherein the microorganism is applied to the roots of plants.

8. The use of any one of claims 1 and 3 to 7 or the method of any one of claims 2 to 4 wherein the plant is grown under phosphate-limiting conditions.

9. The use of claims 1 and 3 to 7 or the method of any one of claims 2 to 4 wherein the plant is grown under nitrogen-limiting conditions.

10. A plant vegetative growth promoting composition containing the microorganism *Colletotrichum tofieldiae* and optionally a carrier.

11. The composition of claim 10 which is in the form of an emulsion.

12. The composition of claim 10 which is in the form of a powder.

13. A plant seed coated with the microorganism *Colletotrichum tofieldiae.*
